# EUROPEAN PATENT SPECIFICATION

(11) **EP 3 094 168 B1**
(45) Date of publication and mention of the grant of the patent: **15.04.2020**
(21) Application number: 15737467.9
(22) Date of filing: 07.01.2015
(51) Int. Cl.: A01B 79/00, A01B 49/02, A01B 13/08

(54) **ARRANGEMENT AND METHOD FOR DEEP SOIL PREPARATION**
ANORDNUNG UND VERFAHREN FÜR TIEFE BODENVORBEREITUNG
ENSEMBLE ET PROCÉDÉ DE PRÉPARATION DU SOL PROFOND

(30) Priority: 16.01.2014 NO 20140046
(43) Date of publication of application: 23.11.2016
(73) Proprietor: Kverneland Group Operations Norway AS, 4355 Kvernaland (NO)
(72) Inventor: SKJÆVELAND, Magne, 4353 Klepp St. (NO); MØRK, Sindre Kjeang, 3400 Lier (NO)
(74) Representative: Håmsø Patentbyrå AS
(86) International application number: PCT/NO2015/050001
(87) International publication number: WO 2015/108424

(56) References cited:
- WO-A1-2008/107171
- DE-C- 362 304
- DE-C- 483 851
- GB-A- 1 493 116
- US-A- 4 909 335
- US-A- 5 695 012

## Description

The invention relates to an arrangement and a method for the deep strip tillage of a soil.

In areas with low availability of moisture for the vegetation, the agricultural plant production is very much dependent on an efficient utilization of the limited, available amount of water, which the plants have at their disposal. In addition to there being little precipitation or low availability of water for artificial irrigation, the soil under the relatively shallow, tilled layer of soil is often hard and impenetrable to plant roots and water falling on the surface. This results in rainwater running off on the surface instead of being stored as groundwater, or evaporating from the upper, loose soil layer before the plants can make use of the water. In addition, the plant roots are not able to establish a root system deep enough for the deeper-lying groundwater to be utilized as a water source.

Broadly speaking, the loss of moisture through evaporation from the loose soil is in inverse ratio to the distance from the surface. Working the soil to a larger depth will generally create better conditions for the plants, as the roots may be established at a depth, which is less liable to losing moisture through evaporation. In addition, working the soil deeper will give a larger water storage volume over the hard, non-prepared soil. The drawback of deep soil tillage is that it is power-demanding and thereby unachievable in an agriculture not very much mechanized. Accordingly, it is a task in soil tillage to create a larger storage volume for water and the possibility of a deeper root system for the plants without the tilling of the soil becoming too power-demanding, but being achievable also with simple mechanization and limited tractive force available for the soil-working implements.

DE483851 discloses a plough provided with a subsoil loosening share attached on a plate shaped shank releasably attached at the rear of a plough body, the lower end of the shank being attached at one side of the share, the share extending in the transverse direction.

The invention has for its object to remedy or reduce at least one of the drawbacks of the prior art or at least provide a useful alternative to the prior art.

The object is achieved through features, which are specified in the description below and in the claims that follow.

An arrangement is provided for the deep, preferably multistage strip tillage of a soil, especially an oligotrophic and not very porous underground soil which is, to a substantial degree, impenetrable to water and plant roots, wherein the soil is worked by means of a primary working element and a secondary working element, the work being done in each stage, when the secondary working element includes several working element sections, to a larger depth than in the preceding stage by means of the secondary working element, the working element section of each new stage being arranged vertically below, but behind (seen in the direction of motion) the working element section of the preceding stage. The purpose of this is that, in each stage, work is being done in a limited depth of the non-tilled soil, so that the soil that lies right above a working element section can be broken loose and lifted up towards the surface without compacting the surrounding soil to any substantial degree or forcing open soil from an area substantially wider than the working element. It is an aim of the invention to bring the underground soil to the smallest possible degree up into an upper, eutrophic loose-soil layer, which constitutes a cultivation layer. It is also an aim to provide sufficiently deep, tilled portions with near-vertical side definitions towards the non-tilled soil. Such channel-shaped, deep-tilled portions are preferably arranged with regular spacing. A first stage may be a primary working element, which provides a shallow, continuous tilled surface layer, or this layer may be tilled with a following primary working element suitable therefor, possibly be formed from loose soil by said primary working element or further primary working elements. The surface layer prepared may typically be a flat seedbed for cereals, grass and so on or raised ridges or beds for row cultures like potatoes, vegetables and so on. Seeds or tubers for establishing a row culture may be placed in the area between the deep-tilled portions, also called loose-soil channels in what follows, or they may be placed right above the loose-soil channels. The channel depth is typically in the range of 40-60 cm counted from a plane surface.

Each working element section comprises a share arrangement forming the desired channel width. The share arrangement has a working angle which is large enough to ensure sufficiently good soil penetration, but at the same time so small that the vertical movement is limited as much as possible. A share angle lying in the range of 10-30 degrees will usually be adequate for the invention. The share arrangement may, with advantage, be arranged on a plate-shaped double shank, a first shank and a second shank being arranged at the side edges of the share arrangement and bordering the channel against the non-tilled soil and being joined together and attached at an upper portion to an implement frame or connected to a tractive element. A common, single shank, known from cultivators and harrows, for example, and formed with a rectangular or square, compact or hollow cross section, can be used as well. Alternatively, the shank may also project from an element on a main working element, for example from a beam on a plough, from a tine on a cultivator and so on. The plate shape gives sufficient strength and stability and, at the same time, gives the shank a limited transverse dimension in order thereby to prevent a front face of the shank from guiding underground soil up into the upper loose-soil layer to any substantial degree.

The vertical and horizontal spacing of the working element sections is typically the same or decreasing from the first stage to the last stage when the secondary working element is operative in a normal position.

When a soil-working implement is provided with several working elements according to the invention, it may be an advantage for each working element to be provided with a releasing device, preferably an automatically resettable releasing device, which provides for the working element to yield upwards when meeting extra strong resistance, for example stones or other earthfast bodies, so that the working depth of the implement as a whole is not affected to any degree worth mentioning. The advantage of an automatically resettable releaser is that it returns the working element to its normal working position after the obstacle has been passed.

In a first aspect, the invention relates more specifically to an arrangement for the deep strip tillage of a soil forming tilled channels in non-tilled soil, wherein a secondary working element including one or more working element sections, wherein, in a working position
a first partial working element exhibits a larger working depth than a primary working element,
   characterized in that
each working element section comprises a share arrangement arranged between plate-shaped first and second shanks, first and second shanks being attached to side edges of the share arrangement and forming borders between a loose-soil channel and a portion of the non-tilled soil,
each working element section of the share arrangement forming the desired width of the channel,
further working element sections each exhibiting a larger working depth than the preceding working element section,
the working element sections exhibiting a horizontal spacing, viewed rearwards from the first working element section relative to the working direction of the secondary working element, and
the centre lines of the working element sections being arranged in the same plane.

The secondary working element may be connected to the primary working element.

There may be a decreasing vertical distance from the first, upper working element section to the last, lower working element section.

The secondary working element may be provided with a releasing device. Alternatively, the releasing device may be automatically resettable.

The working angle of the share arrangement may lie in the range of 10-30 degrees.

In a second aspect, the invention relates more specifically to a method of establishing strip-shaped, deep loos-soil channels in a soil arranged to store water and receive parts of the root system of a vegetation, wherein the method includes the following steps:
tilling an upper loose-soil layer with a primary working element;
forming a strip-shaped loose-soil channel by extending the depth of the loose-soil channel in a stepped manner by moving a secondary working element through the soil, a first working element section exhibiting a larger working depth than a primary working element and loosening a first strip-shaped portion of the soil lying under said loose-soil layer, and following working element sections successively loosening further portions of the soil under the above-lying loose-soil channel formed, the following working element sections each exhibiting a larger working depth than the preceding working element section, the working element sections exhibiting a horizontal spacing, viewed rearwards from the first working element sections relative to the working direction of the secondary working element, and the centre lines of successive working element sections being arranged in the same plane, each working element section comprising a share arrangement arranged between plate-shaped first and second shanks, said first and second shanks being attached to side edges of the share arrangement, wherein the method includes the further step:
   immediately supporting a portion of the soil towards the loose-soil channel with the shanks.

Also described is an arrangement and method for the deep strip tillage of a soil forming tilled channels in non-tilled soil, wherein each working element section comprises a share arrangement held by a plate-shaped shank, said shank being attached to and projecting up from one of the side edges of the share arrangement and forming a border between a loose-soil channel and a portion of the non-tilled soil.

In what follows, an example of a preferred embodiment is described, which is visualized in the accompanying drawings, in which:
- Figure 1: shows a section through a soil transversely to the strip-shaped, deep loose-soil channels with an established vegetation;
- Figure 2: shows a principle drawing, in perspective, of a secondary working element according to the invention arranged to be mounted on a frame;
- Figure 3: shows the secondary working element in an alternative embodiment in an assembly with a primary working element, here in the form of a ridging share for moving an upper loose-soil layer;
- Figure 4: shows a soil-preparation implement on a smaller scale, provided with several primary and secondary working elements according to figure 2 assembled on an implement frame for mounting on a tractor, each secondary working element being provided with an automatically resettable releasing device; and
- Figure 5: shows a primary working member, on a larger scale, in the form of a cultivator tine provided with a secondary working element comprising one working element section in an embodiment which is not according to the invention.

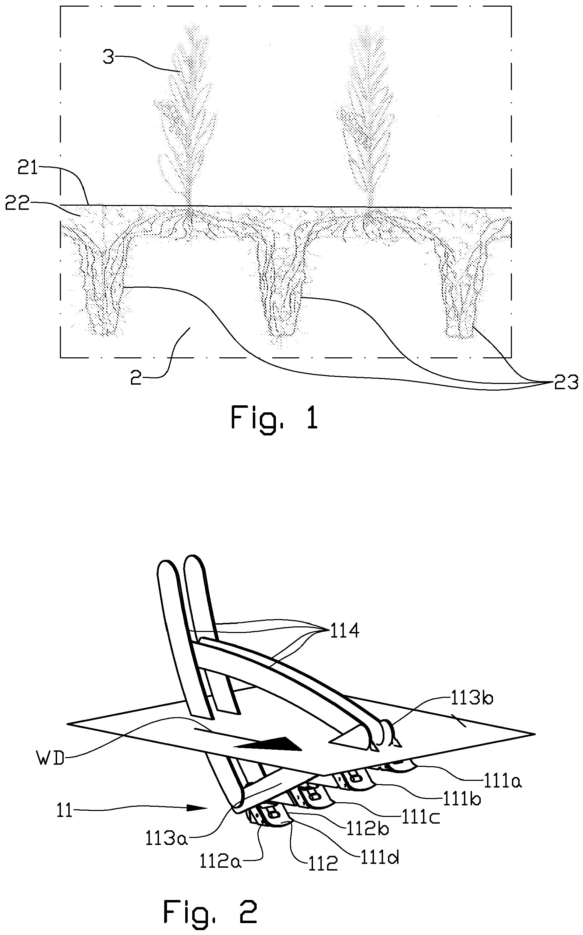

In figure 1, the reference numeral 2 indicates a non-tilled soil covered by an upper loose-soil layer 22 with a surface 21, which is formed according to the cultivation-technical demands made by a vegetation 3. Below the upper loose-soil layer 22, several parallel loose-soil channels 23 extend through the soil 2, substantially of the same shape and parallel. The loose-soil channels 23 provide both a porous, deep-lying volume for collecting water and a volume for quick and deep root development.

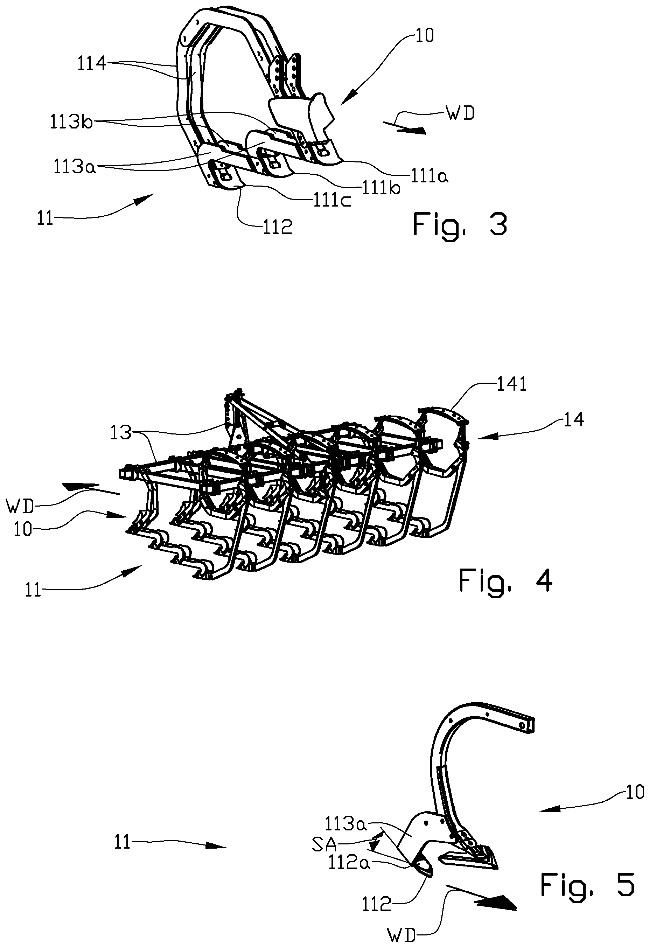

Reference is now made to figure 2, in which a secondary working element 11 is provided with four working element sections 111a, 111b, 111c, 111d arranged between first and second plate-shaped shanks 113a, 113b, the share arrangement 112 of each of the working element sections 111a, 111b, 111c, 111d being attached at its side edges 112a, 112b to the shanks 113a, 113b. Stay bars 114 extend from the end portions of the shanks 113a, 113b for the attachment of the secondary working element 11 to an implement frame 13 (see figure 4). The vertical distance between the working element sections 111a, 111b, 111c, 111 d is decreasing from the upper working element section 111a to the lower working element section 111d. The working direction of the secondary working element 11 is indicated by an arrow WD. The share arrangement 112 has a working angle SA, see figure 5.

In figure 3 is shown an alternative embodiment of a three-share secondary working element 11 combined with a primary working element 10 in the form of a surface-forming share mounted in front of and above a first working element section 111a. The shanks 113a, 113b connecting the working element sections 111a, 111b, 111c are sectioned and extend between the share arrangements 112. Stay bars 114 project up from the front and rear working element sections 111a, 111c.

Reference is now made to figure 4, in which several four-share secondary working elements 11 and associated primary working elements 10 are arranged on an implement frame 13 for attachment to a tractor or the like. Each secondary working element 11 is provided with an automatically resettable releasing device 14, in which a pre-tensioned actuator is formed of a spring-leaf assembly 141.

In figure 5 is shown an alternative embodiment of a one-share secondary working element 11 arranged on a primary working element 10 in the form of a cultivator tine, a share arrangement 112 being attached to the primary working element 10 by means of only one shank 113a projecting up from one side edge 112a of the share arrangement 112 and thereby being placed to one side relative to the centre line of the share arrangement 112 (not part of the invention). The working angle of the share arrangement 112 is indicated by SA. This typically lies in the range of 10-30 degrees relative to the working direction WD of the secondary working element 11 and depends on the need for the soil-penetration capacity of the share arrangement 112, the hardness of the soil 2 and the need to prevent the soil of the loose-soil channel 23 from being carried up into the upper loose-soil layer 22, among other things.

For the preparation of a soil 2, an implement is adapted to the magnitude of the tractive power available. For simple operating conditions, an implement including one secondary working element 11 provided with connecting means, not shown, for a horse or another draught animal, and steering handles, not shown, for an operator may be provided. An implement pulled by a tractor may include many parallel secondary working elements 11, for example from 4-5 to about 20 secondary working elements 11. The spacing of the secondary working elements 11 is adapted to the need of the vegetation, which is going to be established, the characteristics of the traction unit and so on.

When the soil 2 is being tilled, the secondary working element 11 is lowered successively into the soil 2 while the implement is being pulled forwards. The share arrangements 112 each cut out a strip-shaped portion of the soil 2, forming a loose-soil layer, which is partially lifted up towards the surface 21. Because of the positioning of the working element sections 111a, 111b, 111c, 111d relative to each other and relative to the working direction of the implement, each share arrangement 112 will have a limited effective working depth in non-tilled soil 2, which reduces the overall power consumption and reduces the risk of the loose-soil channels 23 getting sloping side edges, that is to say a substantially V-shaped cross section. The arrangement according to the invention thereby enables a relatively deep strip tillage of soil, which is in need of a larger storage volume for water, an improved possibility of quick establishment of a deep root system for the vegetation, and drainage of an upper loose-soil layer to the ground-water storage of the underlying soil without any eroding surface run-off.

The embodiment according to figure 5 may have the advantage of the secondary working element 11 risking, to a smaller degree, becoming blocked by roots, stones and so on, as a single shank 113a lets such elements pass to a greater degree than two shanks 113a, 113b placed relatively tightly, as is shown in the figures 2-4.

Letting one shank 113a project up from one side edge of the share arrangement 112, as has been done in the embodiment according to figure 5 (not part of the invention), has the advantage of the shank 113a preventing the flow of soil, which has been loosened by the share arrangement, to a lesser degree than a centred shank. The share arrangement 112 may still achieve sufficient support and stability by the lower portion of the shank 113a being L-shaped and extending in under the share arrangement 112.

## Claims

1. An arrangement for the deep strip tillage of a soil (2) forming tilled channels (23) in non-tilled soil, wherein a secondary working element (11) includes one or more working element sections (111a, 111b, 111c, 111d), wherein, in a working position,
a first working element section (111a) exhibits a larger working depth than a primary working element (10),
**characterized in that**
each working element section (111a, 111b, 111c, 111d) comprises a share arrangement (112) arranged between plate-shaped first and second shanks (113a, 113b), said first and second shanks (113a, 113b) being attached to side edges (112a, 112b) of the share arrangement (112) and forming borders between a loose-soil channel (23) and a portion of the non-tilled soil (2),
each working element section (111a, 111b, 111c, 111d) of the share arrangement (112) forming the desired width of the channel (23),
further working element sections (111b, 111c, 111d) each exhibiting a larger working depth than the preceding working element section (111a, 111b, 111c),
the working element sections (111a, 111b, 111c, 111d) exhibiting a horizontal spacing, viewed rearwards from the first working element sections (111a) relative to the working direction (WD) of the secondary working element (11), and
the centre lines of successive working element sections (111a, 111b, 111c, 111d) being arranged in the same plane.

2. The arrangement according to claim 1, wherein the secondary working element (11) is connected to the primary working element (10).

3. The arrangement according to claim 1, wherein there is a decreasing vertical distance from the first, upper working element section (111a) to the last, lower working element section (111d).

4. The arrangement according to claim 1, wherein the secondary working element (11) is provided with a releasing device (14).

5. The arrangement according to claim 1, wherein the secondary working element (11) is provided with an automatically resettable releasing device (14).

6. The arrangement according to claim 1, wherein a working angle (SA) of the share arrangement (112) lies in the range of 10-30 degrees.

7. A method of establishing strip-shaped, deep loose-soil channels (23) in a soil (2) arranged to store water and receive parts of the root system of a vegetation, wherein the method includes the following steps:
working an upper loose-soil layer (22) with a primary working element (10);
forming a strip-shaped loose-soil channel (23) by extending the depth of the loose-soil channel (23) in a stepped manner by moving a secondary working element (11) through the soil (2), a first working element section (111a) exhibiting a larger working depth than a primary working element (10) and loosening a first strip-shaped portion of the soil (2) lying under said loose-soil layer (22), and following working element sections (111b, 111c, 111d) successively loosening further portions of the soil (2) under the above-lying loose-soil channel (23) formed, the following working element sections (111b, 111c, 111d) each exhibiting a larger working depth than the preceding working element section (111a, 111b, 111c), the working element sections (111a, 111b, 111c, 111d) exhibiting a horizontal spacing, viewed rearwards from the first working element sections (111a) relative to the working direction (WD) of the secondary working element (11), and the centre lines of successive working element sections (111a, 111b, 111c, 111d) being arranged in the same plane, each working element section (111a, 111b, 111c, 111d) comprising a share arrangement (112) arranged between plate-shaped first and second shanks (113a, 113b), said first and second shanks (113a, 113b) being attached to side edges (112a, 112b) of the share arrangement (112), wherein the method includes the further step:
immediately supporting a portion of the soil (2) towards the loose-soil channel (23) with the shanks (113a, 113b).

## Patentansprüche

1. Anordnung für die Tiefstreifenbearbeitung eines Bodens (2), unter Bildung von bestellten Kanälen (23) in nicht-bestelltem Boden, wobei ein sekundäres Arbeitselement (11) einen oder mehrere Arbeitselementbereiche (111a, 111b, 111c, 111d) beinhaltet, wobei, in einer Arbeitsposition,
- ein erster Arbeitselementbereich (111a) eine grössere Arbeitstiefe aufweist als ein erstes Arbeitselement (10),
**dadurch gekennzeichnet,**
- **dass** jeder Arbeitselementbereich (111a, 111b, 111c, 111d) eine gemeinsame Anordnung (112) aufweist, welche zwischen den plattenförmigen ersten und zweiten Schäften (113a, 113b) angeordnet ist, wobei die ersten und zweiten Schäfte (113a, 113b) an Seitenkanten (112a, 112b) der gemeinsamen Anordnung (112) befestigt sind und Grenzen zwischen einem Lockererde-Kanal (23) und einem Bereich des nicht-bestellten Bodens (2) bilden,
- **dass** jeder Arbeitselementbereich (111a, 111b, 111c, 111d) der gemeinsamen Anordnung (112) die gewünschte Breite des Kanals (23) bildet,
- **dass** weitere Arbeitselementbereich (111b, 111c, 111d) jeweils eine grössere Arbeitstiefe aufweisen als der vorhergehende Arbeitselementbereich (111a, 111b, 111c),
- **dass** die Arbeitselementbereiche (111a, 111b, 111c, 111d) eine horizontale Beabstandung aufweisen, rückwärts betrachtet von den ersten Arbeitselementbereichen (111a) in Bezug auf die Arbeitsrichtung (WD) des sekundären Arbeitselements (11), und
- **dass** die Mittellinien von aufeinanderfolgenden Arbeitselementbereichen (111a, 111b, 111c, 111d) in der gleichen Ebene angeordnet sind.

2. Anordnung gemäss Anspruch 1, wobei das sekundäre Arbeitselement (11) mit dem primären Arbeitselement (10) verbunden ist.

3. Anordnung gemäss Anspruch 1, wobei ein abnehmender vertikaler Abstand vom ersten, oberen Arbeitselementbereich (111a) zum letzten, unteren Arbeitselementbereich (111d) besteht.

4. Anordnung gemäss Anspruch 1, wobei das sekundäre Arbeitselement (11) eine Lösevorrichtung (14) aufweist.

5. Anordnung gemäss Anspruch 1, wobei das sekundäre Arbeitselement (11) eine automatisch rückstellbare Lösevorrichtung (14) aufweist.

6. Anordnung gemäss Anspruch 1, wobei ein Arbeitswinkel (SA) der gemeinsamen Anordnung (112) im Bereich von 10-30 Grad liegt.

7. Verfahren zur Bildung von streifenförmigen, tiefen Lockererde-Kanälen (23) in einem Boden (2), welche angeordnet sind, um Wasser zu speichern und um Teile des Wurzelsystems einer Vegetation aufzunehmen, wobei das Verfahren die folgenden Schritte beinhaltet:
- Bearbeiten einer oberen Lockererde-Schicht (22) mit einem primären Arbeitselement (10);
- Bilden eines streifenförmigen Lockererde-Kanals (23) durch schrittweise Vergrösserung der Tiefe des Lockererde-Kanals (23), indem ein sekundäres Arbeitselement (11) durch den Boden (2) bewegt wird, wobei ein erster Arbeitselementbereich (111a) eine grössere Arbeitstiefe aufweist als ein primäres Arbeitselement (10) und durch Lockerung eines ersten streifenförmigen Bereichs des Bodens (2), welcher unter der besagten Lockererde-Schicht (22) liegt, wobei nachfolgende Arbeitselementbereiche (111b, 111c, 111d) sukzessiv weitere Bereiche des Bodens (2) unter dem darüber liegenden gebildeten Lockererde-Kanal (23) lockern, wobei die nachfolgenden Arbeitselementbereiche (111b, 111c, 111d) jeweils eine grössere Arbeitstiefe aufweisen als der vorhergehende Arbeitselementbereich (111a, 111b, 111c), wobei die Arbeitselementbereiche (111a, 111b, 111c, 111d) eine horizontale Beabstandung aufweisen, rückwärts betrachtet von den ersten Arbeitselementbereichen (111a) in Bezug auf die Arbeitsrichtung (WD) des sekundären Arbeitselements (11), und wobei die Mittellinien von aufeinanderfolgenden Arbeitselementbereichen (111a, 111b, 111c, 111d) in der gleichen Ebene angeordnet sind, wobei jeder Arbeitselementbereich (111a, 111b, 111c, 111d) eine gemeinsame Anordnung (112) aufweist, welche zwischen plattenförmigen ersten und zweiten Schäften (113a, 113b) angeordnet ist, wobei die ersten und zweiten Schäfte (113a, 113b) an Seitenkanten (112a, 112b) der gemeinsamen Anordnung (112) befestigt sind, wobei das Verfahren ferner den folgenden Schritt aufweist:
- sofortiges Stützen eines Bereichs des Bodens (2) mit den Schäften (113a, 113b) zum Lockererde-Kanal (23) hin.

## Revendications

1. Un agencement pour le labour en bandes profondes d'un sol (2), formant des sillons labourés (23) dans un sol non labouré, dans lequel un élément de travail secondaire (11) comprend une ou plusieurs sections d'élément de travail (111a, 111b, 111c, 111d), dans lequel, dans une position de travail,
une première section d'élément de travail (111a) présente une profondeur de travail plus grande qu'un élément de travail principal (10),
**caractérisé en ce que**
chaque section d'élément de travail (111a, 111b, 111c, 111d) comprend un l'agencement de partage (112) agencé entre des première et seconde tiges en forme de plaque (113a, 113b) qui sont raccordées à des bords latéraux (112a, 112b) de l'agencement de partage (112), et formant des frontières entre un sillon de sol meuble (23) et une partie du sol non labouré (2),
chaque section d'élément de travail (111a, 111b, 111c, 111d) de l'agencement de partage (112) formant la largeur désirée du sillon (23),
des sections d'élément de travail (111b, 111c, 111d) supplémentaires présentant chacune une profondeur de travail plus grande que les sections d'élément de travail (111 a, 111b, 111c) précédentes,
les sections d'élément de travail (111a, 111b, 111c, 111d) présentent un espacement horizontal, vu vers l'arrière depuis les premières sections d'élément de travail (111a) par rapport à la direction de travail (WD) de l'élément de travail secondaire (11), et
les lignes centrales de sections d'élément de travail (111a, 111b, 111c, 111d) successives étant disposées dans le même plan.

2. L'agencement selon la revendication 1, dans lequel l'élément de travail secondaire (11) est connecté à l'élément de travail primaire (10).

3. L'agencement selon la revendication 1, dans lequel il existe une distance verticale décroissante depuis la première section d'élément de travail (111a) supérieure vers la dernière section d'élément de travail (111d) inférieure.

4. L'agencement selon la revendication 1, dans lequel l'élément de travail secondaire (11) est pourvu d'un dispositif de libération (14).

5. L'agencement selon la revendication 1, dans lequel l'élément de travail secondaire (11) est pourvu d'un dispositif de libération à réarmement automatique (14).

6. L'agencement selon la revendication 1, dans lequel un angle de travail (SA) de l'agencement de partage (112) se situe dans la plage de 10 à 30 degrés

7. Un procédé pour établir des sillons profonds de sol meuble en forme de bande (23) dans un sol (2) agencé pour stocker de l'eau et recevoir des parties du système racinaire d'une végétation, dans lequel le procédé comprend les étapes suivantes:
travailler une couche supérieure de sol meuble (22) avec un élément de travail primaire (10);
former un sillon de sol meuble en forme de bande (23) en étendant la profondeur du sillon de solmeuble (23) d'une manière échelonnée en déplaçant un élément de travail secondaire (11) à travers le sol (2), une première section d'élément de travail (111a) présentant une profondeur de travail plus grande qu'un élément de travail primaire (10) et desserrer une première partie en forme de bande du sol (2) se trouvant sous le sillon de sol meuble (23) supérieur formé, les sections d'élément de travail suivantes (111b, 111c, 111d) présentant chacune une profondeur de travail plus grande que la section d'élément de travail précédente (11a, 111b, 111c), les sections d'élément de travail (111a, 111b, 111c, 111d) présentant un espacement horizontal, vu vers l'arrière depuis les premières sections d'élément de travail (111a) par rapport à la direction de travail (WD) de l'élément de travail secondaire (11), et les lignes centrales de sections d'élément de travail (111a, 111b, 111c, 111d) successives étant disposées dans le même plan, chaque section d'élément de travail (111a, 111b, 111c, 111d) comprenant un agencement de partage (112) agencé entre des première et seconde tiges en forme de plaque (113a, 113b), lesdites première et seconde tiges (113a, 113b) étant raccordées aux bords latéraux (112a, 112b) de l'agencement de partage (112), dans lequel le procédé comprend l'étape supplémentaires:
supporter immédiatement une partie du sol (2) envers le sillon de sol meuble (23) avec les tiges (113a, 113b).
